(19) Europäisches Patentamt
European Patent Office
Office européen des brevets

(11) **EP 4 617 393 A1**

(12) **EUROPEAN PATENT APPLICATION**
published in accordance with Art. 153(4) EPC

(43) Date of publication:
**17.09.2025 Bulletin 2025/38**

(21) Application number: **23888051.2**

(22) Date of filing: **08.11.2023**

(51) International Patent Classification (IPC):
*C22C 38/02* (2006.01)    *C22C 38/04* (2006.01)
*C22C 38/06* (2006.01)    *C21D 8/12* (2006.01)
*C21D 1/26* (2006.01)

(52) Cooperative Patent Classification (CPC):
Y02P 10/20

(86) International application number:
**PCT/CN2023/130488**

(87) International publication number:
**WO 2024/099362 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 CN 202211408849**

(71) Applicants:
- **Zhangjiagang Yangtze River Cold Rolled
  Plate Co. Ltd
  Suzhou, Jiangsu 215625 (CN)**
- **Institute of Research of Iron and Steel,
  Jiangsu Province/Sha-Steel, Co. Ltd (CN)
  Suzhou, Jiangsu 215625 (CN)**

- **Jiangsu Shagang Group Co., Ltd.
  Suzhou, Jiangsu 215625 (CN)**

(72) Inventors:
- **HUANG, Jie
  Suzhou, Jiangsu 215625 (CN)**
- **XIE, Shishu
  Suzhou, Jiangsu 215625 (CN)**
- **YUE, Chongxiang
  Suzhou, Jiangsu 215625 (CN)**
- **LU, Jiadong
  Suzhou, Jiangsu 215625 (CN)**

(74) Representative: **Gille Hrabal
Partnerschaftsgesellschaft mbB
Patentanwälte
Brucknerstraße 20
40593 Düsseldorf (DE)**

(54) **NON-ORIENTED SILICON STEEL PLATE AND PRODUCTION METHOD THEREFOR**

(57)    The present invention provides a non-oriented silicon steel plate and a production method therefor, wherein the contents of Si and Al in the non-oriented silicon steel are finely controlled based on the value of (Si/Al)/(Si+Al), and the production process is precisely controlled. This promotes the texture optimization of the silicon steel substrate, reduces the iron loss after secondary annealing, and thus significantly reduces the losses of motor products. Additionally, the total amount of Si and Al added in the non-oriented silicon steel plate is low, resulting in lower alloy costs and a simpler production process. Therefore, the comprehensive cost of the non-oriented silicon steel plate is relatively low, making the product more competitive in the market.

FIG. 1

# EP 4 617 393 A1

## Description

### TECHNICAL FIELD

The present application relates to the field of alloy technology, and particularly to a non-oriented silicon steel plate and a production method therefor.

### BACKGROUND

Non-oriented silicon steel sheets are prone to internal stress and local plastic deformation during the punching and shearing processes of motor stator and rotor laminations, leading to lattice distortion and destruction of magnetic domain structures. This results in reduced magnetic permeability and increased hysteresis loss, ultimately causing increased motor losses. Additionally, mechanical and magnetic imbalances in the shearing area of the stator teeth during stamping can affect the motor's frictional torque. To improve the performance of silicon steel sheets after punching and shearing, downstream users, especially compressor manufacturers, require secondary annealing of the stator and rotor laminations. This secondary annealing is primarily aimed at eliminating residual stress and lattice distortion after punching and shearing, and restoring the magnetic properties of the silicon steel plate. However, different silicon steel compositions and manufacturing processes exhibit varying effect of recovery and improvement after secondary annealing. Some silicon steel sheets, despite undergoing secondary annealing, show insignificant reduction in iron loss, and the resulting motor cores still exceed loss standards.

Therefore, optimizing the composition and process of non-oriented silicon steel to achieve lower losses and more stable comprehensive performance is a concern for secondary annealing users. Most current solutions involve adding beneficial elements and increasing production processes to enhance magnetic properties. For example, Chinese Patent CN103667879A discloses a non-oriented electrical steel with excellent magnetic and mechanical properties and its production method, which adds Sn or Sb elements, resulting in higher alloy costs and requiring normalization, leading to higher manufacturing costs. Chinese Patent CN104195426B discloses a semi-processed non-oriented silicon steel, which uses a bell-type furnace for recrystallization annealing, resulting in low production efficiency. Moreover, small elongation leveling is required after bell-type annealing, which necessitates additional production equipment and complicates the manufacturing process. The above methods have high alloy and manufacturing costs, and their production processes are complex. Therefore, there is a need for a low-cost, simple manufacturing process for producing non-oriented silicon steel.

### SUMMARY

The object of the present application is to provide a non-oriented silicon steel plate and a production method therefor. The present application provides a production method for a non-oriented silicon steel plate, wherein chemical components of the non-oriented silicon steel composition comprise the following components in mass percentage: C≤0.005%, Si: 0.60~1.60%, Al: 0.40~0.80%, Mn: 0.20~0.80%, S≤0.003%, N≤0.003%, and the balance of Fe and other inevitable impurities, wherein the inevitable impurities comprise: C≤0.005%, S≤0.003%, N≤0.003%; and the contents of Si and Al satisfy the following formula:

$$0.83 \leq \frac{\frac{Si}{Al}}{Si+Al} \leq 1.67$$

where the element symbols represent the mass percentages of the respective elements;
the production method comprises the following steps:

smelting and casting according to the above chemical components to obtain an slab;
heating the slab, and performing a hot rolling process on the slab after heating to obtain a hot rolled plate;
performing a cold rolling process on the hot rolled plate to obtain a cold rolled plate;
performing a recrystallization annealing process on the cold rolled plate to obtain a first annealed steel plate, wherein the recrystallization annealing temperature is controlled to be 800~950°C, and the holding time is controlled to be 50~200s;
performing a secondary annealing process on the first annealed steel plate to obtain a second annealed steel plate, wherein the secondary annealing temperature is controlled to be 750~850°C, and the holding time is controlled to be 1~3h.

As a further improvement of the application, heating the slab specifically comprises:
heating the slab to a temperature range of 1050~1200°C, controlling the heating time to be 150~200min, and controlling the temperature fluctuation to be within ±20°C.

As a further improvement of the application, performing a hot rolling process on the slab after heating to obtain a hot rolled plate specifically comprises:
controlling the hot rolling start temperature to be ≤1200°C, the finish rolling temperature to be ≥840°C, and controlling the finish rolling temperature fluctuation to be within ±20°C.

As a further improvement of the application, performing a hot rolling process on the slab after heating to obtain a hot rolled plate further comprises:
after obtaining the hot rolled plate, performing laminar flow cooling on the hot rolled plate and then coiling, and controlling the coiling temperature to be ≤700°C, with the coiling temperature fluctuation controlled to be within ±20°C.

As a further improvement of the application, performing a cold rolling process on the hot rolled plate to obtain a cold rolled plate specifically comprises:
cold rolling the hot rolled plate to form a cold rolled plate with a thickness of 0.47~0.51mm.

As a further improvement of the application, after performing the recrystallization annealing process on the cold rolled plate to obtain a first annealed steel plate, the method further comprises:
coating an insulating coating on the surface of the first annealed steel plate.

As a further improvement of the application, the recrystallization annealing process on the cold rolled plate is performed in a hydrogen-nitrogen protective atmosphere; and the secondary annealing process on the first annealed steel plate is performed in a nitrogen gas or DX gas protective atmosphere.

The present application also provides a non-oriented silicon steel plate, which is manufactured using the production method described above, wherein the iron loss reduction rate $\triangle P_{15/50}/P_{15/50}$ of the non-oriented silicon steel plate is more than 15%.

The present application further provides a non-oriented silicon steel plate, wherein chemical components of the non-oriented silicon steel composition comprise the following components in mass percentage: C≤0.005%, Si: 0.60~1.60%, Al: 0.40~0.80%, Mn: 0.20~0.80%, S≤0.003%, N≤0.003%, and the balance of Fe and other inevitable impurities, wherein the inevitable impurities comprise: C≤0.005%, S≤0.003%, N≤0.003%; and the contents of Si and Al satisfy the following formula:

$$0.83 \leq \frac{\frac{Si}{Al}}{Si+Al} \leq 1.67$$

where the element symbols represent the mass percentages of the respective elements.

As a further improvement of the application, the iron loss reduction rate $\triangle P_{15/50}/P_{15/50}$ of the non-oriented silicon steel plate is more than 15%.

The advantageous effects of the present application are as follows: by finely controlling the Si and Al contents in the non-oriented silicon steel based on the value of (Si/Al)/(Si+Al) and precisely controlling the production process, the texture optimization of the silicon steel substrate is promoted, and the iron loss after secondary annealing is reduced, thereby significantly reducing the losses of motor products. Additionally, the total amount of Si and Al added in the non-oriented silicon steel plate is low, resulting in lower alloy costs and a simpler production process. Therefore, the comprehensive cost of the non-oriented silicon steel plate is relatively low, making the product more competitive in the market.

**BRIEF DESCRIPTION OF THE DRAWINGS**

FIG. 1 is a schematic diagram of the steps of the production method for a non-oriented silicon steel plate according to an embodiment of the present application; and
Figure 2a, 2b are texture distribution diagrams of Example 3 and Comparative Example 1 respectively.

**DETAILED DESCRIPTION**

To make the objectives, technical solutions, and advantages of the present application more clear, the following will provide a detailed description of the technical solutions of the present application in conjunction with specific embodiments and the accompanying drawings. It is evident that the described embodiments are only part of the embodiments of the present application, rather than all of them. Based on the embodiments of the present application, all other embodiments obtained by a person of ordinary skill in the art without creative efforts are within the scope of protection of the present application.

The embodiments of the present application are illustrated in the drawings, where the same or similar reference numerals denote the same or similar elements or elements with the same or similar functions throughout. The embodiments described below with reference to the drawings are exemplary and are used to explain the present application, but should not be construed as limiting the present application.

The embodiment provides a non-oriented silicon steel plate and its production method, wherein the value of (Si/Al)/(Si+Al) is introduced as a control factor for the addition of Si and Al (where the element symbols represent the mass percentages of the respective elements). By coordinating with the production process control, the texture optimization of the silicon steel substrate can be effectively promoted, and the iron loss after secondary annealing can be reduced. When used as electrical steel in motor products, it can significantly reduce the losses of motor products.

The non-oriented silicon steel composition provided in this embodiment, in terms of mass percentage, comprises: C≤0.005%, Si: 0.60~1.60%, Al: 0.40~0.80%, Mn: 0.20~0.80%, S≤0.003%, N≤0.003%, and the balance of Fe and other inevitable impurities, wherein the inevitable impurities comprise: C≤0.005%, S≤0.003%, N≤0.003%.

The core idea of the chemical composition design of the steel plate in the present application is to add only a small amount of Si and Al and control the component content of Si and Al based on the value of (Si/Al)/(Si+Al) to improve the steel plate texture, resulting in lower iron loss and more stable magnetic properties after secondary annealing. Compared with non-oriented silicon steel plates that add elements such as Sn or Sb, the steel plate in this embodiment has lower alloy costs and a simpler manufacturing process, with lower manufacturing difficulty and cost.

Specifically, the design principles of the chemical composition of the steel plate are as follows:

Si: Si is the most important alloying element in electrical steel, which can effectively increase the resistivity of the steel and reduce eddy current losses. However, as the Si content increases, the magnetic flux density decreases, which deteriorates the magnetic induction strength. Therefore, in this embodiment, the Si content is controlled to be 0.60~1.60%.

Al: Al has a similar effect to Si, which can increase the resistivity and reduce eddy current losses. Different Al contents result in different sizes and distributions of precipitated AlN, which have different inhibitory effects on grain growth. When the Al content is low, the formation of fine and dispersed AlN by the combination of Al and N significantly inhibits grain growth during annealing, which significantly reduces magnetic properties. When the Al content is between 0.005%~0.01%, the size of the AlN inclusions formed is less than $1\mu m$, which has a significant pinning effect on magnetic domains, leading to deterioration of magnetic properties. When the Al content is high, the size of the precipitated AlN phase is larger, which is beneficial for grain coarsening. Therefore, increasing the Al content is very beneficial for improving magnetic properties, especially for non-oriented silicon steel with extremely low iron loss.

Additionally, Al can reduce the austenite phase field, promote grain growth and texture improvement, and reduce iron loss. For non-oriented silicon steel, {100} and {110} textures are beneficial for magnetic properties, while {111} and {112} textures are detrimental. The detrimental {111} texture tends to nucleate at grain boundaries and inclusions. Therefore, when the grain size is small, there are more grain boundaries, making it easier for detrimental textures to nucleate, which increases the intensity of detrimental textures and reduces magnetic properties. A suitable Al content promotes grain growth, reduces the intensity of the detrimental {111} texture, and thus lowers iron loss.

However, while Al reduces iron loss, it also deteriorates magnetic induction. Therefore, in this embodiment, the Al content is controlled to be 0.40~0.80%.

Furthermore, the contents of Si and Al satisfy the following formula:

$$0.83 \leq \frac{\dfrac{Si}{Al}}{Si+Al} \leq 1.67$$

where the element symbols represent the mass percentages of the respective elements.

Al reduces iron loss more significantly than Si but deteriorates magnetic induction less than Si, and the beneficial effects become more pronounced as the Si content increases. To improve the magnetic properties after secondary annealing, especially to reduce the iron loss of black sheets after secondary annealing, the contents of Si and Al are limited according to the above formula. This ratio significantly affects the iron loss reduction rate $\triangle P_{15/50}/P_{15/50}$ before and after secondary annealing. When the ratio of the formula is less than 1.67, the texture is significantly improved, the iron loss reduction rate increases, and the effect of secondary annealing is significantly enhanced. When the ratio is below 0.83, magnetic properties fluctuate significantly and stability is weak.

Mn: Mn can form MnS with S, which prevents the formation of low-melting-point FeS along grain boundaries, thereby avoiding the thermal embrittlement phenomenon in hot-rolled plates. Therefore, a certain amount of Mn must be added to the steel to improve its hot-rolling plasticity. Additionally, Mn can expand the austenite phase field, and the solubility product of MnS in the austenite phase is lower than that in the ferrite phase, which promotes the coarsening of MnS and reduces its pinning effect on grain boundaries, benefiting grain growth and lowering iron loss $P_{15/50}$. On the other hand, increasing the Mn content reduces the ferrite phase field, which lowers the annealing temperature and is unfavorable for grain growth. Therefore, the Mn content is conventionally controlled to be 0.20~0.80%.

C: In non-oriented silicon steel plates, C is a harmful element. When the C content is too high, magnetic aging is likely to occur, and an increase in the C content in the finished steel plate will increase iron loss $P_{15/50}$. Therefore, the C content needs to be controlled at a low level. In this embodiment, the C content is controlled to be C ≤ 0.005%.

S: S is a harmful element. When S forms fine MnS with Mn, it strongly inhibits grain growth during steel plate annealing, and iron loss $P_{15/50}$ increases with the S content under any Mn content. Therefore, the S content needs to be controlled below 0.003%.

N: N is a harmful element, easily forming fine AlN particles that inhibit grain growth. When the N content exceeds 0.0025%, iron loss $P_{15/50}$ is likely to increase significantly. Moreover, N is an element prone to magnetic aging, and its impact on aging is greater than that of C. Therefore, the N content needs to be controlled below 0.003%.

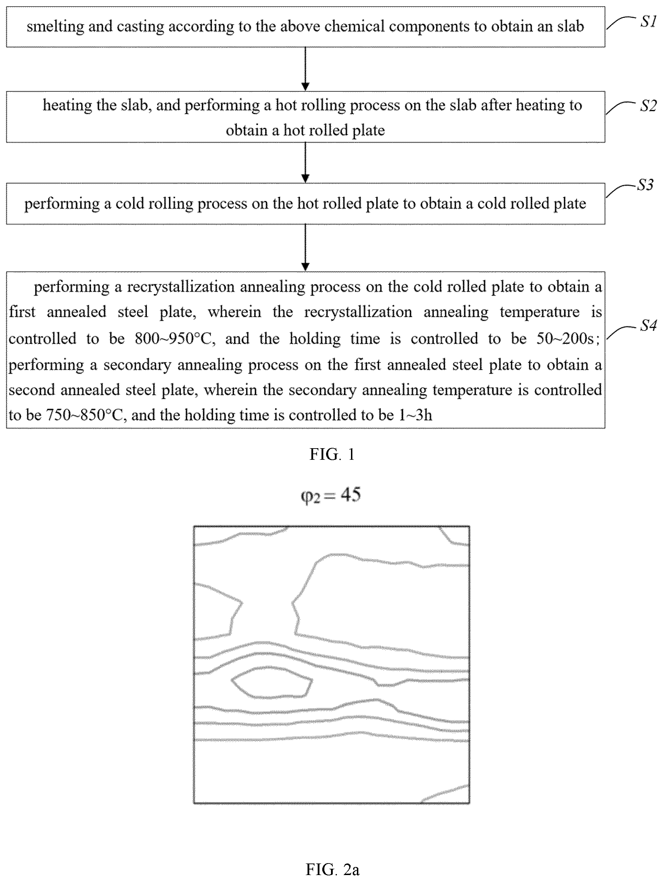

As shown in Figure 1, the production method for the non-oriented silicon steel plate includes the following steps:

S1: smelting and casting according to the above chemical components to obtain an slab.

S2: heating the slab, and performing a hot rolling process on the slab after heating to obtain a hot rolled plate.

S3: performing a cold rolling process on the hot rolled plate to obtain a cold rolled plate.

S4: performing a recrystallization annealing process on the cold rolled plate to obtain a first annealed steel plate, wherein the recrystallization annealing temperature is controlled to be 800~950°C, and the holding time is controlled to be 50~200s;

performing a secondary annealing process on the first annealed steel plate to obtain a second annealed steel plate, wherein the secondary annealing temperature is controlled to be 750~850°C, and the holding time is controlled to be 1~3h.

In step S1, the slab can be obtained by either converter smelting or electric furnace smelting, followed by secondary refining and continuous casting after obtaining the molten steel. The smelting, refining, and continuous casting processes can refer to conventional steel plate production processes.

Specifically, step S2 includes:

heating the slab to a temperature range of 1050~1200°C, controlling the heating time to be 150~200min, and controlling the temperature fluctuation to be within ±20°C.

In step S2, the slab is heated before rolling to a uniform and suitable temperature for rolling, which can improve the plasticity of the steel, reduce deformation resistance, and make the slab easier to deform. This allows for a larger reduction in thickness during slab rolling. Additionally, heating can improve the internal structure and properties of the slab, as uneven structures and non-metallic inclusions can be homogenized through the diffusion effect of high-temperature heating. However, an excessively long heating time can reduce the magnetic properties of the steel plate, so the heating time needs to be controlled to avoid overheating. Moreover, an excessively high heating temperature can cause precipitates in the slab to dissolve, and during hot rolling, fine inclusions may precipitate, inhibiting the growth of annealing grains, leading to increased iron loss and reduced magnetic induction. Therefore, the heating temperature must be controlled.

The slab can be heated using cold slab heating or hot charging into the heating furnace.

Further, in step S2, performing a hot rolling process after heating on the slab to obtain a hot rolled plate specifically comprises:

controlling the hot rolling start temperature to be ≤1200°C, the finish rolling temperature to be ≥840°C. The rolling temperature is controlled to avoid accelerating recrystallization during hot rolling, which would deteriorate the hot rolled plate's structure and increase the iron loss and reduce the magnetic induction of the finished plate.

After obtaining the hot rolled plate, laminar flow cooling is performed on the hot rolled plate, followed by coiling, with the coiling temperature controlled to be ≤700°C, to prevent the precipitation of fine and dispersed inclusions in the hot rolled plate, which would inhibit the growth of annealing grains.

Further, the finish rolling temperature and coiling temperature fluctuations are controlled within ±20°C to ensure the stability of the steel plate's magnetic properties.

After hot rolling, the hot rolled plate is further cold rolled to form a cold rolled plate with a thickness of 0.47~0.51mm.

In steps S4 and S5, the cold rolled plate is subjected to a recrystallization annealing process in a hydrogen-nitrogen protective atmosphere, and the first annealed steel plate is subjected to a secondary annealing process in a nitrogen gas or DX gas protective atmosphere. This prevents oxidation on the surface of the cold rolled plate. An insulating coating is applied to the surface of the first annealed steel plate to further protect the steel plate and prevent oxidation.

Through the first and secondary annealing processes, the steel plate is fully recrystallized, and the effects of punching and shearing stresses can be eliminated, while the texture of the steel plate is adjusted.

A specific embodiment of the present invention will be introduced below by way of five examples in combination with three comparative examples .

Examples 1~5 and comparative examples 1~3 were all produced according to the above production method. The contents of Si and Al elements, some process parameters, and magnetic properties of examples 1~5 and comparative examples 1~3 are shown in Table 1. Except for the Si and Al elements, the contents of other elements in examples 1~5 and comparative examples 1~3 were added according to the above specifications.

[Table 1]

| Serial number | Example 1 | Example 2 | Example 3 | Example 4 | Example 5 | Comparative example 1 | Comparative example 2 | Comparative example 3 |
|---|---|---|---|---|---|---|---|---|
| Si | 0.60 | 1.55 | 0.80 | 1.20 | 0.80 | 1.00 | 1.40 | 1.65 |
| Al | 0.60 | 0.75 | 0.55 | 0.50 | 0.40 | 0.40 | 0.30 | 0.35 |
| Si/Al | 1.00 | 2.82 | 1.45 | 2.40 | 2.00 | 2.50 | 4.67 | 4.71 |
| Si+Al | 1.20 | 2.30 | 1.35 | 1.70 | 1.20 | 1.40 | 1.70 | 2.00 |
| (Si/Al)/(Si+Al) | 0.83 | 0.90 | 1.08 | 1.41 | 1.67 | 1.79 | 2.75 | 2.36 |
| Heating temperature (°C) | 1140 | 1140 | 1130 | 1140 | 1130 | 1140 | 1140 | 1140 |
| Finish rolling temperature (°C) | 880 | 880 | 870 | 880 | 870 | 870 | 880 | 870 |
| Coiling temperature (°C) | 700 | 700 | 700 | 690 | 700 | 690 | 690 | 690 |
| Recrystallization annealing temperature (°C) | 850 | 950 | 850 | 900 | 850 | 850 | 900 | 950 |
| Iron loss $P_{15/50}$ of white piece (W/kg) | 4.32 | 3.26 | 4.28 | 3.82 | 4.4 | 4.32 | 3.95 | 3.34 |
| Magnetic induction of white piece $B_{50}$ (T) | 1.738 | 1.692 | 1.739 | 1.709 | 1.738 | 1.728 | 1.702 | 1.688 |
| Secondary annealing temperature (°C) | 800 | 800 | 800 | 800 | 800 | 800 | 800 | 800 |
| Secondary annealing time (h) | 2 | 2 | 2 | 2 | 2 | 2 | 2 | 2 |
| Iron loss $P_{15/50}$ of black piece (W/kg) | 3.43 | 2.75 | 3.52 | 3.18 | 3.65 | 3.82 | 3.53 | 3.02 |
| Magnetic induction of black piece $B_{50}$ (T) | 1.728 | 1.687 | 1.731 | 1.699 | 1.722 | 1.706 | 1.688 | 1.679 |
| Iron loss reduction rate $\Delta P_{15/50}/P_{15/50}$ (%) | 20.6 | 15.6 | 17.4 | 16.8 | 17.0 | 11.6 | 10.6 | 9.6 |

According to Table 1, it can be seen that the magnetic properties of the final silicon steel plate are closely related to the value of (Si/Al)/(Si+Al). Compared with the comparative examples, the magnetic properties of the examples after secondary annealing are more excellent, especially in terms of iron loss performance. Under the same iron loss before secondary annealing, the iron loss after secondary annealing is significantly reduced, and the iron loss reduction rate is higher.

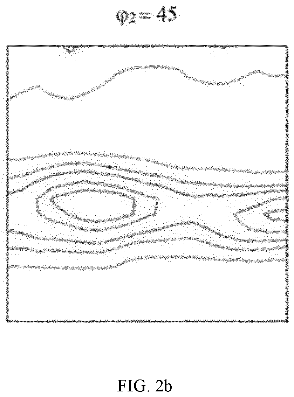

The texture of example 3 and comparative example 1 was analyzed. The total amount of Si+Al alloy in example 3 and comparative Example 1 is similar, and the magnetic properties are comparable. A quantitative analysis of the texture of both is shown in Figure 2a and Figure 2b, which are the texture distribution diagrams of example 3 and comparative example 1, respectively. The detrimental texture {111}<112> in example 3 is weaker than in comparative example 1, and there are stronger beneficial textures {001}<110> and {001}<120>. It can be seen that for non-oriented silicon steel with a similar total amount of Si+Al alloy, by adjusting the ratio of (Si/Al)/(Si+Al) in the steel, the texture can be optimized, further enhancing the magnetic properties of the non-oriented silicon steel.

In summary, this embodiment finely controls the contents of Si and Al in the non-oriented silicon steel based on the value of (Si/Al)/(Si+Al), and precisely controls the production process, promoting the texture optimization of the silicon steel substrate, reducing the iron loss after secondary annealing, and thus significantly reducing the losses of motor products. Additionally, the total amount of Si and Al added in the non-oriented silicon steel plate is low, resulting in lower alloy costs and a simpler production process. Therefore, the comprehensive cost of the non-oriented silicon steel plate is relatively low, making the product more competitive in the market.

It should be understood that although the description is divided into embodiments, each embodiment may not contain only one independent technical solution. The division of the description is for clarity, and those skilled in the art should consider the description as a whole. Various technical solutions in the embodiments can be appropriately combined to form other embodiments that can be understood by those skilled in the art.

The detailed descriptions listed above are only specific explanations of the feasible embodiments of the present application and are not intended to limit the scope of protection of the present application. Any equivalent embodiments or modifications made without departing from the spirit and scope of the present application should be included within the scope of protection of the present application.

**Claims**

1. A production method for a non-oriented silicon steel plate, wherein:

   chemical components of the non-oriented silicon steel composition comprise the following components in mass percentage: C≤0.005%, Si: 0.60~1.60%, Al: 0.40~0.80%, Mn: 0.20~0.80%, S≤0.003%, N≤0.003%, and the balance of Fe and other inevitable impurities, wherein the inevitable impurities comprise: C≤0.005%, S≤0.003%, N≤0.003%; and the contents of Si and Al satisfy the following formula:

$$0.83 \leq \frac{\frac{Si}{Al}}{Si+Al} \leq 1.67$$

   where the element symbols represent the mass percentages of the respective elements;
   the production method comprises the following steps:

   smelting and casting according to the above chemical components to obtain an slab;
   heating the slab, and performing a hot rolling process on the slab after heating to obtain a hot rolled plate;
   performing a cold rolling process on the hot rolled plate to obtain a cold rolled plate;
   performing a recrystallization annealing process on the cold rolled plate to obtain a first annealed steel plate, wherein the recrystallization annealing temperature is controlled to be 800~950°C, and the holding time is controlled to be 50~200s;
   performing a secondary annealing process on the first annealed steel plate to obtain a second annealed steel plate, wherein the secondary annealing temperature is controlled to be 750~850°C, and the holding time is controlled to be 1~3h.

2. The production method for a non-oriented silicon steel plate according to claim 1, wherein heating the slab specifically comprises:
   heating the slab to a temperature range of 1050~1200°C, controlling the heating time to be 150~200min, and controlling the temperature fluctuation to be within ±20°C.

3. The production method for a non-oriented silicon steel plate according to claim 2, wherein performing a hot rolling process on the slab after heating to obtain a hot rolled plate specifically comprises:
controlling the hot rolling start temperature to be ≤1200°C, controlling the finish rolling temperature to be ≥840°C, and controlling the finish rolling temperature fluctuation to be within ±20°C.

4. The production method for a non-oriented silicon steel plate according to claim 3, wherein performing a hot rolling process on the slab after heating to obtain a hot rolled plate further comprises:
after obtaining the hot rolled plate, performing laminar flow cooling on the hot rolled plate and then coiling, and controlling the coiling temperature to be ≤700°C, with the coiling temperature fluctuation controlled to be within ±20°C.

5. The production method for a non-oriented silicon steel plate according to claim 1, wherein performing a cold rolling process on the hot rolled plate to obtain a cold rolled plate specifically comprises:
cold rolling the hot rolled plate to form a cold rolled plate with a thickness of 0.47~0.51mm.

6. The production method for a non-oriented silicon steel plate according to claim 1, wherein after performing the recrystallization annealing process on the cold rolled plate to obtain a first annealed steel plate, the method further comprises:
coating an insulating coating on the surface of the first annealed steel plate.

7. The production method for a non-oriented silicon steel plate according to claim 1, wherein the recrystallization annealing process on the cold rolled plate is performed in a hydrogen-nitrogen protective atmosphere; and the secondary annealing process on the first annealed steel plate is performed in a nitrogen gas or DX gas protective atmosphere.

8. A non-oriented silicon steel plate, wherein chemical components of the non-oriented silicon steel composition comprise the following components in mass percentage: C≤0.005%, Si: 0.60~1.60%, Al: 0.40~0.80%, Mn: 0.20~0.80%, S≤0.003%, N≤0.003%, and the balance of Fe and other inevitable impurities, wherein the inevitable impurities comprise: C≤0.005%, S≤0.003%, N≤0.003%; and the contents of Si and Al satisfy the following formula:

$$0.83 \leq \frac{\frac{Si}{Al}}{Si+Al} \leq 1.67$$

where the element symbols represent the mass percentages of the respective elements;
the non-oriented silicon steel plate has an iron loss reduction rate $\triangle P_{15/50}/P_{15/50}$ of more than 15%.

| smelting and casting according to the above chemical components to obtain an slab | S1 |

| heating the slab, and performing a hot rolling process on the slab after heating to obtain a hot rolled plate | S2 |

| performing a cold rolling process on the hot rolled plate to obtain a cold rolled plate | S3 |

performing a recrystallization annealing process on the cold rolled plate to obtain a first annealed steel plate, wherein the recrystallization annealing temperature is controlled to be 800~950°C, and the holding time is controlled to be 50~200s; performing a secondary annealing process on the first annealed steel plate to obtain a second annealed steel plate, wherein the secondary annealing temperature is controlled to be 750~850°C, and the holding time is controlled to be 1~3h    S4

FIG. 1

$\varphi_2 = 45$

FIG. 2a

$\varphi_2 = 45$

FIG. 2b

## INTERNATIONAL SEARCH REPORT

| International application No. |
|---|
| **PCT/CN2023/130488** |

| A. | CLASSIFICATION OF SUBJECT MATTER |
|---|---|

C22C38/02(2006.01)i；C22C38/04(2006.01)i；C22C38/06(2006.01)i；C21D8/12(2006.01)i；C21D1/26(2006.01)i

According to International Patent Classification (IPC) or to both national classification and IPC

| B. | FIELDS SEARCHED |
|---|---|

Minimum documentation searched (classification system followed by classification symbols)

C22C，C21D

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, DWPI, ISI web of science, 中国期刊网全文数据库, CJFD, 读秀, DUXIU: 扬子江冷轧, 沙钢, 硅钢, 无取向, 非取向, Si, 硅, Al, 铝, Mn, 锰, 硅铝比, Si/Al, 铝硅比, Al/S, 两次, 二次, 退火, 绝缘, 冷轧, 热轧, 铁损, silicon steel, non oriented, silicon, aluminum, second, double, annealing, insulation, cold rolling, hot rolling, core loss

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115558868 A (ZHANGJIAGANG YANGZIJIANG COLD ROLLED SHEET CO., LTD. et al.) 03 January 2023 (2023-01-03)<br>claims 1-10 | 1-8 |
| X | CN 110735088 A (MAANSHAN IRON & STEEL CO., LTD.) 31 January 2020 (2020-01-31)<br>description, paragraphs [0010]-[0028] | 1-8 |
| A | CN 104480383 A (WUHAN IRON & STEEL (GROUP) CORP.) 01 April 2015 (2015-04-01)<br>entire document | 1-8 |
| A | CN 110819879 A (MAANSHAN IRON & STEEL CO., LTD.) 21 February 2020 (2020-02-21)<br>entire document | 1-8 |
| A | CN 104152800 A (HEBEI IRON & STEEL CO., LTD.) 19 November 2014 (2014-11-19)<br>entire document | 1-8 |
| A | KR 20020012643 A (POSCO) 20 February 2002 (2002-02-20)<br>entire document | 1-8 |

☐ Further documents are listed in the continuation of Box C.　　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2023** | **15 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/130488**

| Patent document cited in search report | | | Publication date (day/month/year) | Patent family member(s) | | | Publication date (day/month/year) |
|---|---|---|---|---|---|---|---|
| CN | 115558868 | A | 03 January 2023 | CN | 115558868 | B | 14 April 2023 |
| CN | 110735088 | A | 31 January 2020 | None | | | |
| CN | 104480383 | A | 01 April 2015 | CN | 104480383 | B | 02 November 2016 |
| CN | 110819879 | A | 21 February 2020 | None | | | |
| CN | 104152800 | A | 19 November 2014 | None | | | |
| KR | 20020012643 | A | 20 February 2002 | KR | 100516458 | B1 | 23 September 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103667879 A

- CN 104195426 B